# EUROPEAN PATENT APPLICATION

(11) **EP 4 706 906 A1**
(43) Date of publication of application: **11.03.2026**
(21) Application number: 25199243.4
(22) Date of filing: 01.09.2025
(51) Int. Cl.: B25J 9/16, G06F 3/01

(54) **ROBOT REMOTE CONTROL SYSTEM, ROBOT REMOTE CONTROL METHOD, AND PROGRAM**

(30) Priority: 05.09.2024 JP 2024153437
(71) Applicant: HONDA MOTOR CO., LTD., Tokyo 105-8404 (JP)
(72) Inventor: YASUI, Yuji, Wako-shi, Saitama, 351-0193 (JP); IINUMA, Ken, Wako-shi, Saitama, 351-0193 (JP)
(74) Representative: Kiwit, Benedikt

(57) **Abstract**

The robot remote control system includes a control device controlling a robot and an HMI used by an operator when remotely controlling the robot. The HMI displays a video of surroundings of the robot on a display, detects a sightline or the like of the operator using an eye tracker, estimates an operation intention of the operator, and transmits sightline data indicating the detected sightline or the like and operation data indicating the estimated operation intention of the operator to the control device. The control device determines a target position of the robot on the basis of the sightline data and the operation data received from the HMI and moves the robot to the target position.

## Description

### BACKGROUND

### Field of the Invention

The present invention relates to a robot remote control system, a robot remote control method, and a program.

### Description of Related Art

Technology of remotely controlling a robot by drawing a moving route on a tablet terminal by hand is known (for example, see Japanese Unexamined Patent Application, First Publication No. 2023-156710). When a movement destination of an avatar robot is instructed, a position on an outside image acquired from the avatar robot is clicked and instructed using a mouse or a controller of a virtual reality (VR) goggle.

### SUMMARY

It is conceivable that an avatar robot be made to independently understand an outside situation and be made to move autonomously to a position instructed by an operator while avoiding obstacles or the like. However, even when this mechanism is applied, an operator is likely to feel troubled in operating the mouse or the controller of the VR goggle or to feel stressed until becoming skilled in the operation. Particularly, when many buttons or levers are operated, an operator is likely to feel stressed.

The present invention was made in consideration of the aforementioned circumstances and an objective thereof is to provide a robot remote control system, a robot remote control method, and a program that can instruct an avatar robot to move or rotate with a simple operation, reduce a stress at the time of operating of the avatar robot, and create feelings as if the avatar robot can be controlled as intended by an operator.

A robot remote control system, a robot remote control method, and a program according to the present invention employ the following configurations.
(1) A first example of the present invention is a robot remote control system including a control device configured to control a robot and a human-machine interface used by an operator when remotely controlling the robot, wherein the human-machine interface includes a first communication interface configured to communicate with the control device, a display configured to display a video of surroundings of the robot captured by a camera, an eye tracker configured to detect a sightline and/or viewpoint of the operator in a period in which the operator sees the display on which the video is displayed, an estimator configured to estimate an operation intention of the operator, and a first processor configured to transmit sightline data which is data indicating the sightline and/or viewpoint detected by the eye tracker and operation data which is data indicating the operation intention of the operator estimated by the estimator to the control device via the first communication interface, and wherein the control device includes a second communication interface configured to communicate with the human-machine interface and a second processor configured to determine a target position of the robot on the basis of the sightline data and the operation data when the sightline data and the operation data are received from the human-machine interface by the second communication interface and to move the robot to the target position.
(2) A second example of the present invention is the robot remote control system according to the first example, wherein the second processor determines a first target position in a traveling direction of the robot and a second target position in a rotating direction of the robot as the target position.
(3) A third example of the present invention is the robot remote control system according to the first or second example, wherein the human-machine interface further includes an input interface configured to receive the operator's operation, and the second processor determines a position of the viewpoint of the operator detected by the eye tracker as the target position of the robot when a predetermined operation is input to the input interface in the period in which the operator sees the display on which the video is displayed.
(4) A fourth example of the present invention is the robot remote control system according to the third example, wherein the second processor updates the target position of the robot according to the position of the viewpoint of the operator in a period in which the predetermined operation is being input to the input interface.
(5) A fifth example of the present invention is the robot remote control system according to the third or fourth example, wherein the input interface includes a voice user interface or a switch interface, and the predetermined operation is an operation of inputting predetermined speech to the voice user interface or an operation of operating the switch interface.
(6) A sixth example of the present invention is the robot remote control system according to any one of the first to fifth example, wherein the second processor determines the target position of the robot on the basis of change of an amount of movement of the viewpoint of the operator detected by the eye tracker.
(7) A seventh example of the present invention is the robot remote control system according to the sixth example, wherein the second processor determines a position on which the change of the amount of movement of the viewpoint converges as the target position of the robot.
(8) An eighth example of the present invention is a robot remote control method using a control device configured to control a robot and a human-machine interface used by an operator when remotely controlling the robot, the robot remote control method including: causing the human-machine interface to communicate with the control device, causing the human-machine interface to display a video of surroundings of the robot captured by a camera on a display, causing the human-machine interface to detect a sightline and/or viewpoint of the operator in a period in which the operator sees the display on which the video is displayed, causing the human-machine interface to estimate an operation intention of the operator; causing the human-machine interface to transmit sightline data which is data indicating the detected sightline and/or viewpoint and operation data which is data indicating the estimated operation intention of the operator to the control device; causing the control device to communicate with the human-machine interface; causing the control device to determine a target position of the robot on the basis of the sightline data and the operation data when the sightline data and the operation data are received from the human-machine interface; and causing the control device to move the robot to the target position.
(9) A ninth example of the present invention is a program that is executed by a control device configured to control a robot and a human-machine interface used by an operator when remotely controlling the robot, the program causing the human-machine interface to perform: communicating with the control device; displaying a video of surroundings of the robot captured by a camera on a display; detecting a sightline and/or viewpoint of the operator in a period in which the operator sees the display on which the video is displayed; estimating an operation intention of the operator; and transmitting sightline data which is data indicating the detected sightline and/or viewpoint and operation data which is data indicating the estimated operation intention of the operator to the control device, the program further causing the control device to perform: communicating with the human-machine interface; determining a target position of the robot on the basis of the sightline data and the operation data when the sightline data and the operation data are received from the human-machine interface; and moving the robot to the target position.

According to the aforementioned examples, it is possible to instruct an avatar robot to move or rotate with a simple operation, to reduce a stress at the time of operating of the avatar robot, and to create feelings as if the avatar robot can be controlled as intended by an operator.

### BRIEF DESCRIPTION OF THE DRAWINGS

FIG. 1 is a diagram illustrating an example of a situation in which a robot remote control system according to a first embodiment is used.
FIG. 2 is a diagram illustrating functional configurations of a robot and a control device according to the first embodiment.
FIG. 3 is a diagram illustrating functional configurations of an HMI according to the first embodiment.
FIG. 4 is a flowchart illustrating a flow of a series of processes in the robot remote control system according to the first embodiment.
FIG. 5 is a diagram illustrating an example of an operator's viewpoint that is displayed on a wearable display when an instruction to move in a traveling direction of a robot has been given.
FIG. 6 is a diagram illustrating an example of a method of determining a first target position.
FIG. 7 is a diagram illustrating an example of an operator's viewpoint that is displayed on the wearable display when an instruction to move in a rotating direction of a robot has been given.
FIG. 8 is a diagram illustrating an example of a method of determining a second target position.
FIG. 9 is a flowchart illustrating a flow of a series of processes in a robot remote control system according to a second embodiment.
FIG. 10 is a diagram illustrating an example of a method of determining the first target position.
FIG. 11 is a diagram illustrating an example of a method of determining the second target position.
FIG. 12 is a diagram illustrating another example of the method of determining the second target position.
FIG. 13 is a diagram illustrating another example of the method of determining the second target position.

### DETAILED DESCRIPTION

Hereinafter, a robot remote control system, a robot remote control method, and a program according to embodiments of the present invention will be described with reference to the accompanying drawings.

### <First embodiment>

### [Situation of use of robot remote control system]

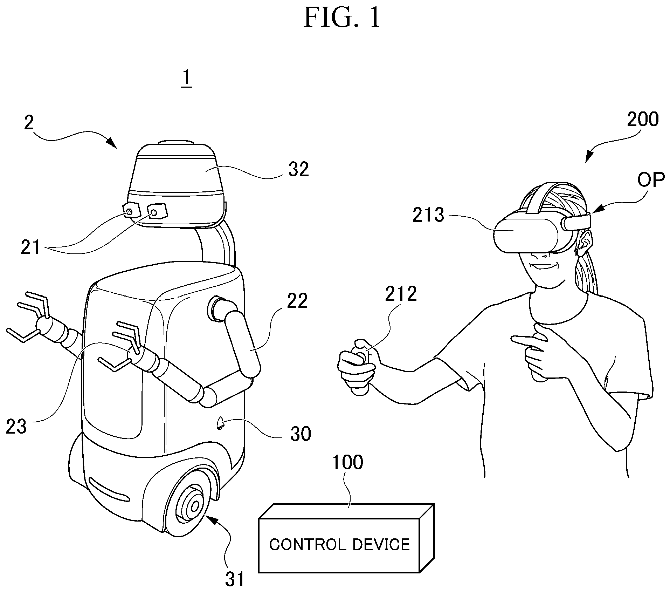

FIG. 1 is a diagram illustrating an example of a situation in which a robot remote control system 1 according to a first embodiment is used. As illustrated in FIG. 1, the robot remote control system 1 includes, for example, an avatar robot 2 (hereinafter simply referred to as a robot 2) that is remotely controlled by an operator OP, a control device 100 that is used to control the robot 2, and a human-machine interface (HMI) 200 that is used by the operator OP. These are connected via a network NW. The network NW includes a local area network (LAN) or a wide area network (WAN).

The robot 2 includes, for example, a camera 21, an arm 22, a hand 23 (which is also referred to as a manipulator or an end effector), a body 30, a wheel 31, and a head 32.

The robot 2 moves by the wheel 31. For example, an end of the arm 22 is attached to both sides of the body 30 with a joint interposed therebetween, and a cylindrical support extending upward is provided on a top surface thereof. The head 32 is provided at an end of the support. The camera 21 is attached to, for example, the head 32. The hand 23 is attached to the other end of the arm 22 with a joint interposed therebetween. The hand 23 may be, for example, a multi-fingered hand including three or more fingers.

The camera 21 images an external environment or a work space when seen from the robot 2. For example, the robot 21 may be a stereo camera. For example, the camera 21 images a situation in which an object is grasped or operated by the hand 23 and transmits video data in which the situation is imaged to the control device 100 or transmits the video data to the HMI 200 via the control device 100.

The robot 2 is not limited to a robot moving with the wheel 31 and may be a robot moving by a caterpillar, a robot moving by bipedal walking or quadrupedal walking, or a robot moving by flying such as a drone.

The control device 100 is typically mounted in the robot 2 and controls the robot 2 on the basis of an operation instruction received from the HMI 200. The control device 100 may not be mounted in the robot 2, and may be installed at a place far from the robot 2 and remotely control the robot 2 via the network NW.

The HMI 200 is, for example, an interface that is used to remotely control the robot 2. For example, the HMI 200 includes an input interface 212 that is operated by an operator OP or a wearable display 213 (also referred to as a wearable device) that is worn by the operator OP.

The input interface 212 is used as a controller for causing the robot 2 to advance, retract, or rotate. The input interface 212 may be used as a controller for moving the hand 23 or the arm 22 of the robot 2. The input interface 212 may be a controller in which a switch interface 212a such as switches, buttons, or a joystick is provided as illustrated in the drawing. For example, the operator OP remotely controls the robot 2 by manually operating the input interface 212 while ascertaining a video displayed on the wearable display 213.

The wearable display 213 is a display for displaying a still image or a moving image (a video) captured by the camera 21 or the like mounted in the robot 2 under remote control. For example, the wearable display 213 is goggles, a headset, a head-mounted display, or a smart glass which is worn on the head for use. The wearable display 213 may be, for example, a device using technology such as virtual reality (VR), augmented reality (AR), mixed reality (MR), or projection mapping. The wearable display 213 is an example of a "display."

### [Functional configuration of robot remote control system]

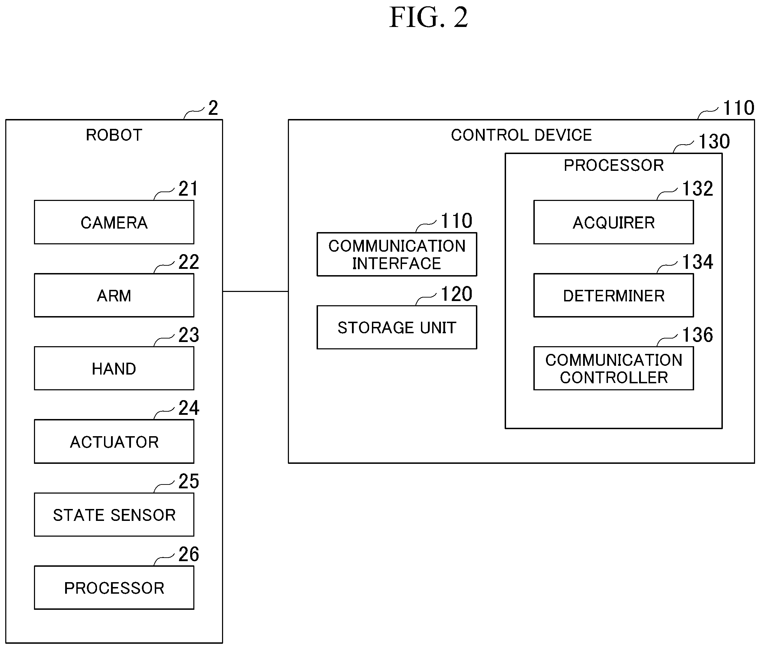

FIG. 2 is a diagram illustrating functional configurations of the robot 2 and the control device 100 according to the first embodiment. The robot 2 includes an actuator 24, a state sensor 25, and a processor 26 in addition to the camera 21, the arm 22, and the hand 23.

The actuator 24 drives constituent parts of the robot 2 (the arm 22, fingers F of the hand 23, and the like) under the control of the processor 26. The actuator 24 includes, for example, electromagnetic motors, gears, and artificial muscles.

The state sensor 25 is a sensor that detects a state of the robot 2 (for example, joint angles, angular velocities, and torques). The state sensor 25 includes, for example, a rotary encoder that detects a degree of rotational motion of the robot 2 or joints of the hand 23, a tension sensor that detects a tension of a wires for rotating a joint, a torque sensor that detects a torque applied to a joint shaft, and an acceleration sensor or a gyro sensor that detects a posture of the robot 2.

The processor 26 controls the actuator 24 on the basis of information output from the control device 100. The processor 26 may be realized by a central processing unit (CPU), a graphics processing unit (GPU), or the like. The processor 26 may be realized by hardware such as a large scale integration (LSI) circuit, an application-specific integrated circuit (ASIC), a field-programmable gate array (FPGA), or a system on chip (SOC) or may be cooperatively realized by software and hardware.

The control device 100 includes, for example, a communication interface 110, a storage unit 120, and a processor 130.

The communication interface 110 communicates with an external device via the network NW or communicates with the robot 2 via a communication line such as a bus. The external device is, for example, the HMI 200. The communication interface 110 includes, for example a wireless communication module including a receiver or a transmitter or a network interface card (NIC). The communication interface 110 is an example of a "second communication interface."

The processor 130 includes, for example, an acquirer 132, a determiner 134, and a communication controller 136. The processor 130 is an example of a "second processor."

The constituents of the processor 130 are realized, for example, by causing a CPU, a GPU, or the like to execute a program or instructions stored in the storage unit 120. Some or all of these constituents may be realized by hardware such as an LSI circuit, an ASIC, or an FPGA or may be cooperatively realized by software and hardware.

The storage unit 120 is realized, for example, by a hard disc drive (HDD), a flash memory, an electrically erasable programmable read only memory (EEPROM), a read only memory (ROM), or a random access memory (RAM). The storage unit 120 stores firmware, application programs, operation results of the processor 130, and the like.

The acquirer 132 acquires video data from the robot 2 or the HMI 200 via the communication interface 110 or acquires operation data, eye tracking data, or motion tracking data from the HMI 200.

The operation data is data (that is, data indicating operation details) indicating what operation has been performed on the input interface 212. In other words, the operation data is data indicating an operation intention of the operator OP for the robot 2.

The eye tracking data is data indicating a sightline and/or viewpoint of the operator OP detected by the eye tracking sensor 214. The eye tracking data is an example of "sightline data."

The motion tracking data is data indicating a motion of the head or the neck of the operator OP detected by the motion tracking sensor 215.

The video data is data indicating a video of the external environment or the work space when seen from the robot 2 which has been imaged by the camera 21 of the robot 2. The video data may include a still image in addition to a video (a moving image).

The determiner 134 determines a position serving as a target (hereinafter referred to as a target position) when the robot 2 is caused to advance or retract or when the robot 2 is caused to rotate on the basis of the operation data and the eye tracking data acquired by the acquirer 132. Hereinafter, the target position which is determined when the robot 2 is caused to advance or retract is referred to a "first target position," and the target position (that is, a rotation angle) which is determined when the robot 2 is caused to rotate is referred to as a "second target position."

The communication controller 136 transmits a control command for moving the robot 2 to the target position to the robot 2 via the communication interface 110. When a control command is received from the control device 100, the processor 26 of the robot 2 controls the actuator 24 on the basis of the control command. Accordingly, the robot 2 moves to the first target position in the traveling direction of the robot 2 or moves to the second target position in the rotating direction.

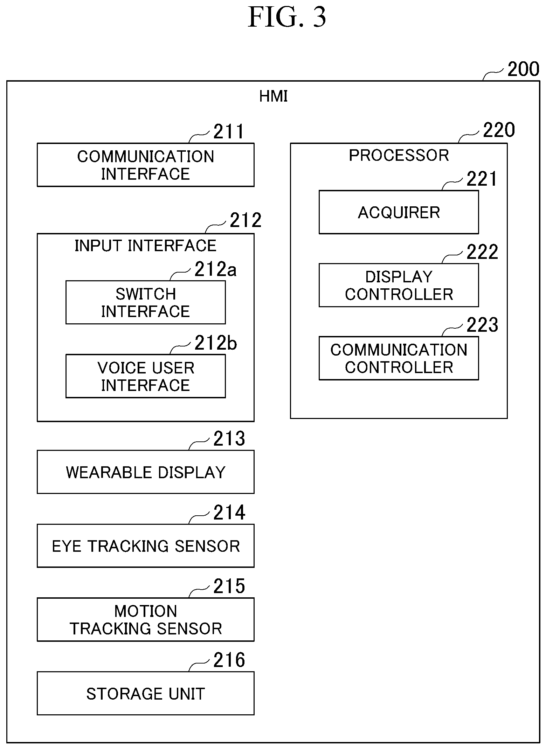

FIG. 3 is a diagram illustrating a functional configuration of the HMI 200 according to the first embodiment. The HMI 200 may include a communication interface 211, an eye tracking sensor 214, a motion tracking sensor 215, a storage unit 216, and a processor 220 in addition to the input interface 212 or the wearable display 213.

The communication interface 211 communicates with the robot 2 or the control device 100 via the network NW. The communication interface 211 includes, for example a wireless communication module including a receiver or a transmitter or an NIC. The communication interface 211 is an example of a "first communication interface."

The input interface 212 may include a voice user interface 212b in addition to or instead of the switch interface 212a (such as switches, buttons, or a joystick). The voice user interface 212b includes a microphone, converts voice uttered by the operator OP to a command for the robot 2, and outputs the command.

The eye tracking sensor 214 detects a sightline and/or viewpoint of the operator OP. For example, the eye tracking sensor 214 may be incorporated into the wearable display 213 and unified with the wearable display 213. In this case, the eye tracking sensor 214 detects a sightline and/or viewpoint of the operator OP wearing the wearable display 213. The eye tracking sensor 214 is an example of an "eye tracker."

The motion tracking sensor 215 detects a motion, a tilt, acceleration, or the like of the head and/or neck of the operator OP. Similarly to the eye tracking sensor 214, the motion tracking sensor 215 may be incorporated into the wearable display 213 and unified with the wearable display 213. For example, the motion tracking sensor 215 may include, for example, a gyroscope, an acceleration meter, or a magnetometer.

The storage unit 216 is realized, for example, by a hard disc drive (HDD), a flash memory, an electrically erasable programmable read only memory (EEPROM), a read only memory (ROM), or a random access memory (RAM). The storage unit 216 stores firmware, application programs, operation results of the processor 220, and the like.

The processor 220 displays video data on the wearable display 213 or transmits an operation command for the robot 2 input to the input interface 212 by the operator OP to the control device 100 via the communication interface 211. The processor 220 is an example of a "first processor."

The processor 220 includes, for example, an acquirer 221, a display controller 222, and a communication controller 223. These constituents may be realized by causing a CPU, a GPU, or the like to execute a program or instructions stored in the storage unit 216. The constituents may be realized by hardware such as an LSI circuit, an ASIC, an FPGA, or an SOC or may be cooperatively realized by software and hardware.

The acquirer 221 acquires video data from the robot 2 via the communication interface 211, acquires operation data from the input interface 21, acquires eye tracking data from the eye tracking sensor 214, or acquires motion tracking data from the motion tracking sensor 215.

The display controller 222 displays the video data acquired from the robot 2 on the wearable display 213.

The communication controller 223 transmits operation data, eye tracking data, motion tracking data, and the like to the control device 100 via the communication interface 211.

### [Process flow of robot remote control system]

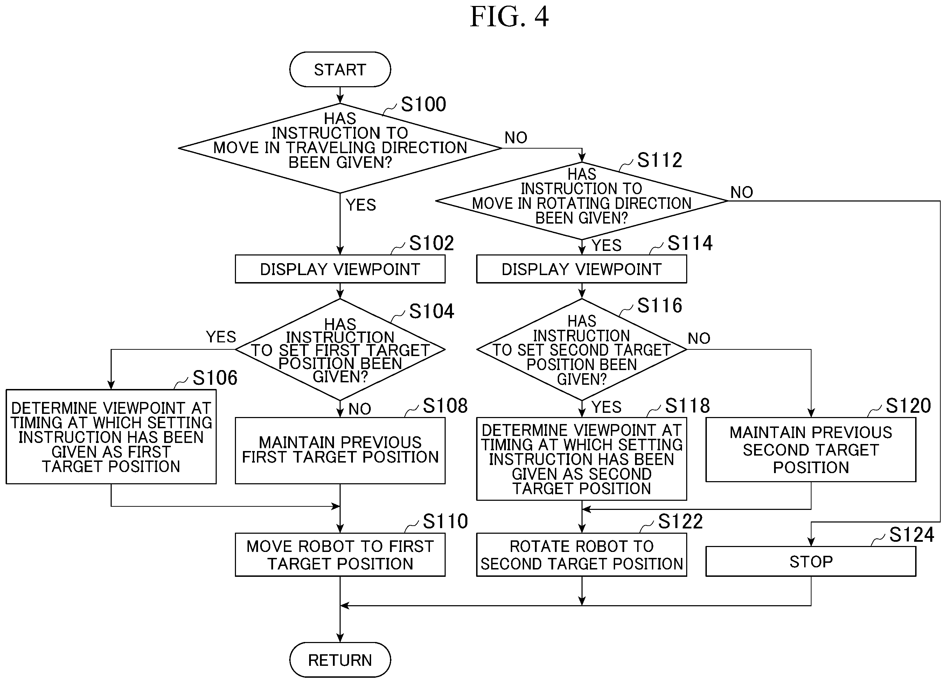

A flow of a series of processes in the robot remote control system 1 according to the first embodiment will be described below with reference to a flowchart. FIG. 4 is a flowchart illustrating a flow of a series of processes of the robot remote control system 1 according to the first embodiment. The process flow in the flowchart may be performed, for example, in a period in which video data is displayed on the wearable display 213.

First, the display controller 222 of the HMI 200 determines whether an instruction to move in the traveling direction of the robot 2 has been given by the operator OP in a period in which the operator OP sees video data of an external environment of the robot 2 (Step S100).

For example, when the operator OP has uttered "advance," "go," "retract," "go back," or the like to the voice user interface 212b, the display controller 222 determines that an instruction to move in the traveling direction of the robot 2 has been given by the operator OP. When the operator OP has operated the switch interface 212a, the display controller 222 may determine that an instruction to move in the traveling direction of the robot 2 has been given by the operator OP.

When an instruction to move in the traveling direction of the robot 2 has been given by the operator OP, the display controller 222 displays the viewpoint of the operator OP detected by the eye tracking sensor 214 on the wearable display 213 (Step S102).

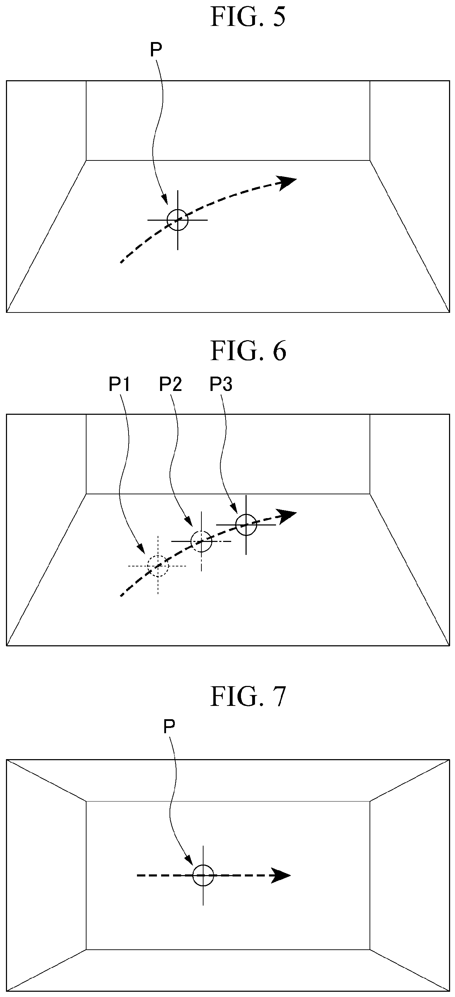

FIG. 5 is a diagram illustrating an example of the viewpoint of the operator OP that is displayed on the wearable display 213 when an instruction to move in the traveling direction of the robot 2 has been given. When an instruction to move in the traveling direction of the robot 2 has been given, the viewpoint of the operator OP is displayed as an indicator P to overlap on the video which is seen by the operator OP.

Then, the acquirer 132 of the control device 100 acquires operation data and eye tracking data from the HMI 200 via the communication interface 110, and the determiner 134 determines whether an instruction to set a first target position has been given on the basis of the operation data and the eye tracking data (Step S104).

The first target position is a target position that is determined when the robot 2 is caused to advance or retract as described above, and a setting instruction thereof is an instruction given by the operator OP to set the first target position.

For example, when the operator OP utters "setting," "set," or the like to the voice user interface 212b after an instruction to move in the traveling direction of the robot 2 has been given, the determiner 134 determines that an instruction to set the first target position has been given by the operator OP. When the operator OP operates the switch interface 212a after an instruction to move in the traveling direction of the robot 2 has been given, the determiner 134 may determine that an instruction to set the first target position has been given by the operator OP. The utterance of "setting," "set," or the like to the voice user interface 212b by the operator OP is an example of a "predetermined operation," and the operation of the switch interface 212a by the operator OP is another example of the "predetermined operation."

When an instruction to set the first target position has been given by the operator OP, the determiner 134 determines the viewpoint of the operator OP at the time at which the setting instruction has been given as the first target position (Step S106).

FIG. 6 is a diagram illustrating an example of the method of determining the first target position. For example, in a period in which the operator OP continues to operate the switch interface 212a, the viewpoint of the operator OP is displayed while changing such as indicators P1, P2, and P3. At this time, for example, when an instruction to set the first target position has been given at the time at which the indicator P2 is displayed, the determiner 134 determines the position of the indicator P2 as the first target position.

The determiner 134 may normally update the first target position according to the indicator P indicating the viewpoint of the operator OP in the period in which an instruction to set the first target position is input to the input interface 212. In the illustrated example, the first target position changes in the order of P1, P2, and P3.

On the other hand, when it is determined in the determination process of Step S104 that an instruction to set the first target position has not been given by the operator OP, the determiner 134 maintains the previously determined first target position instead of newly determining the first target position (Step S108).

Then, the communication controller 136 of the control device 100 transmits a control command for causing the robot 2 to advance or retract to the first target position to the robot 2 via the communication interface 110. As a result, the processor 26 of the robot 2 causes the robot 2 to advance or retract to the first target position by controlling the actuator 24 on the basis of the control command (Step S110).

On the other hand, when it is determined in the determination process of S100 that an instruction to move in the traveling direction of the robot 2 has not been given by the operator OP, the display controller 222 determines whether an instruction to move in the rotating direction of the robot 2 has been given by the operator OP in a period in which the operator OP sees the video data of the external environment of the robot 2 (Step S112).

For example, when the operator OP utters "rotation," "rotate," or the like to the voice user interface 212b, the display controller 222 determines that an instruction to move in the rotating direction of the robot 2 has been given by the operator OP. When the operator OP has operated the switch interface 212a (here, when a button or switch other than that for an instruction to move in the traveling direction has been operated), the display controller 222 may determine that an instruction to move in the rotating direction of the robot 2 has been given by the operator OP.

When an instruction to move in the traveling direction of the robot 2 has been given by the operator OP, the display controller 222 displays the viewpoint of the operator OP detected by the eye tracking sensor 214 on the wearable display 213 (Step S114).

FIG. 7 is a diagram illustrating an example of the viewpoint of the operator OP that is displayed on the wearable display 213 when an instruction to move in the rotating direction of the robot 2 has been given. When an instruction to move in the rotating direction of the robot 2 has been given as illustrated in the drawing, the viewpoint of the operator OP is displayed as an indicator P to overlap the video which is seen by the operator OP similarly to when an instruction to move in the traveling direction has been given.

Then, the acquirer 132 of the control device 100 acquires operation data and eye tracking data from the HMI 200 via the communication interface 110, and the determiner 134 determines whether an instruction to set a second target position has been given on the basis of the operation data and the eye tracking data (Step S116).

The second target position is a target position that is determined when the robot 2 is caused to rotate as described above, and a setting instruction thereof is an instruction which is given by the operator OP to set the second target position.

For example, when the operator OP utters "setting," "set," or the like to the voice user interface 212b after an instruction to move in the rotating direction of the robot 2 has been given, the determiner 134 determines that an instruction to set the second target position has been given by the operator OP. When the operator OP operates the switch interface 212a after an instruction to move in the rotating direction of the robot 2 has been given, the determiner 134 may determine that an instruction to set the second target position has been given by the operator OP.

When an instruction to set the second target position has been given by the operator OP, the determiner 134 determines the viewpoint of the operator OP at the time at which the setting instruction has been given as the second target position (Step S118).

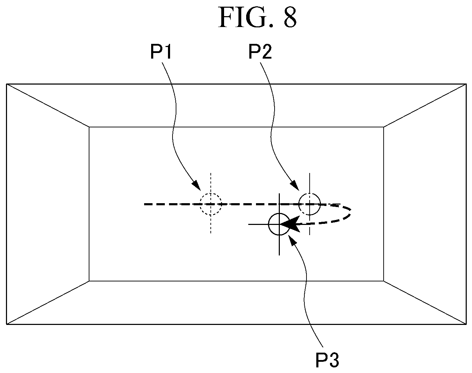

FIG. 8 is a diagram illustrating an example of the method of determining the second target position. For example, in a period in which the operator OP continues to operate the switch interface 212a, the viewpoint of the operator OP is displayed while changing such as the indicators P1 and P2. At this time, for example, when an instruction to set the second target position has been given at the time at which the indicator P2 is displayed, the determiner 134 determines the position of the indicator P2 as the second target position.

The determiner 134 may normally update the second target position according to the indicator P indicating the viewpoint of the operator OP in the period in which an instruction to set the second target position is input to the input interface 212. In the illustrated example, the second target position changes in the order of P1 and P2.

On the other hand, when it is determined in the determination process of S116 that an instruction to set the second target position has not been given by the operator OP, the determiner 134 maintains the previously determined second target position instead of newly determining the second target position (Step S120).

Then, the communication controller 136 of the control device 100 transmits a control command for causing the robot 2 to rotate to the second target position (which may be replaced with a target rotation angle) to the robot 2 via the communication interface 110. As a result, the processor 26 of the robot 2 causes the robot 2 to rotate to the second target position by controlling the actuator 24 on the basis of the control command (Step S122).

On the other hand, when it is determined in the determination process of S100 that an instruction to move in the traveling direction of the robot 2 has not been given by the operator OP and it is determined in the determination process of S112 that an instruction to move in the rotating direction of the robot 2 has not been given, the communication controller 136 of the control device 100 transmits a control command for causing the robot 2 to stop (a command for performing none of advancing, retracting, and rotating) to the robot 2 via the communication interface 110. As a result, the processor 26 of the robot 2 causes the robot 2 to stop by controlling the actuator 24 on the basis of the control command (Step S124).

According to the aforementioned first embodiment, the robot remote control system 1 includes at least the control device 100 for controlling the robot 2 and the HMI 200 used by the operator OP.

The HMI 200 displays video data around the robot 2 captured by the camera 21 on the wearable display 213, detects the sightline and/or viewpoint of the operator OP using the eye tracking sensor 214 in a period in which the operator OP sees the wearable display 213 on which the video data is displayed, and transmits eye tracking data (an example of "sightline data") which is data indicating the sightline and/or viewpoint detected by the eye tracking sensor 214 and operation data which is data indicating an operation of the operator OP input to the input interface 212 to the control device 100.

The control device 100 receives the eye tracking data and the operation data from the HMI 200, determines the target position (the first target position or the second target position) of the robot 2 on the basis of the eye tracking data and the operation data, and causes the robot 2 to move to the target position. By employing this configuration, the operator OP can instruct to move or rotate the robot 2 with a simple operation. As a result, it is possible to reduce a stress at the time of operating of the robot 2 and to create feelings as if the robot 2 can be controlled as intended by the operator OP.

### <Second embodiment>

A second embodiment will be described below. The second embodiment is different from the first embodiment in methods of determining the first target position and the second target position. In the following description, differences from the first embodiment will be mainly described, and description of the same as in the first embodiment will be omitted. In description of the second embodiment, the same elements as in the first embodiment will be referred to by the same reference signs.

### [Process flow of robot remote control system]

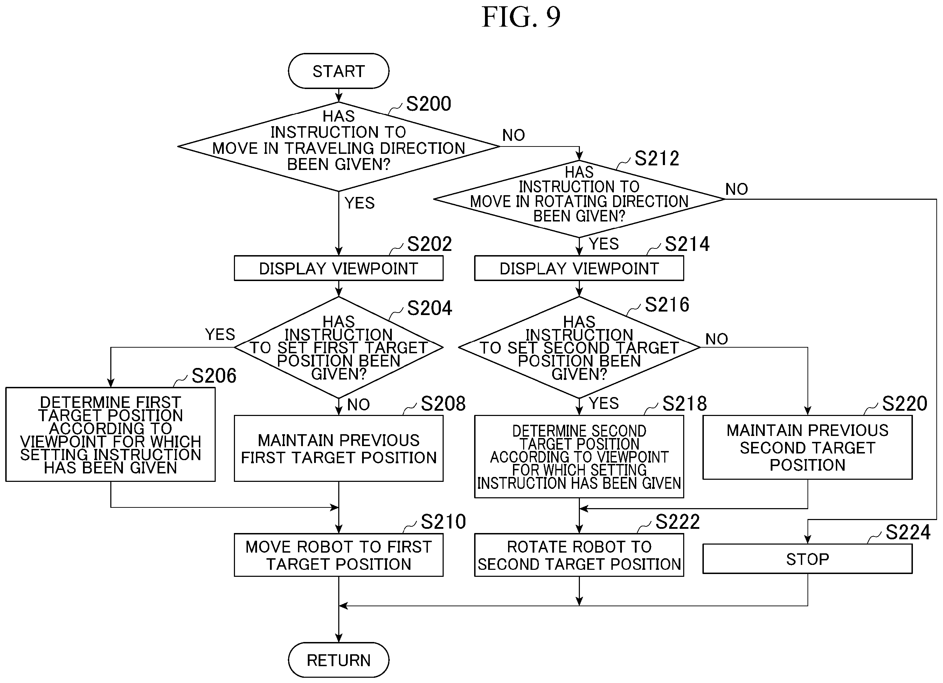

A flow of a series of processes in a robot remote control system 1 according to the second embodiment will be described below with reference to a flowchart. FIG. 9 is a flowchart illustrating a flow of a series of processes of the robot remote control system 1 according to the second embodiment. The process flow in the flowchart may be performed, for example, in a period in which video data is displayed on the wearable display 213.

First, the display controller 222 of the HMI 200 determines whether an instruction to move in the traveling direction of the robot 2 has been given by the operator OP in a period in which the operator OP sees video data of an external environment of the robot 2 (Step S200).

When an instruction to move in the traveling direction of the robot 2 has been given by the operator OP, the display controller 222 displays the viewpoint of the operator OP detected by the eye tracking sensor 214 on the wearable display 213 (Step S202).

Then, the acquirer 132 of the control device 100 acquires operation data and eye tracking data from the HMI 200 via the communication interface 110, and the determiner 134 determines whether an instruction to set the first target position has been given and whether the setting instruction is maintained in a predetermined period on the basis of the operation data and the eye tracking data (Step S204).

For example, when the operator OP utters "tracking on" or the like to the voice user interface 212b after an instruction to move in the traveling direction of the robot 2 has been given, the determiner 134 determines that an instruction to set the first target position has been given and the setting instruction is maintained in the predetermined period. Thereafter, when the operator OP utters "tracking off" or the like to the voice user interface 212b, the determiner 134 determines that maintenance of the instruction to set the first target position ends.

When the operator OP continues to operate the switch interface 212a after an instruction to move in the traveling direction of the robot 2 has been given, the determiner 134 may determine that an instruction to set the first target position has been given and the setting instruction is maintained in the predetermined period (the period of operation). Thereafter, when the operator OP ends the operation of the switch interface 212a, the determiner 134 determines that maintenance of the instruction to set the first target position has ended.

When an instruction to set the first target position has been given by the operator OP and the instruction is maintained, the determiner 134 determines the first target position according to the viewpoint of the operator OP in the period in which the setting instruction is maintained (Step S206).

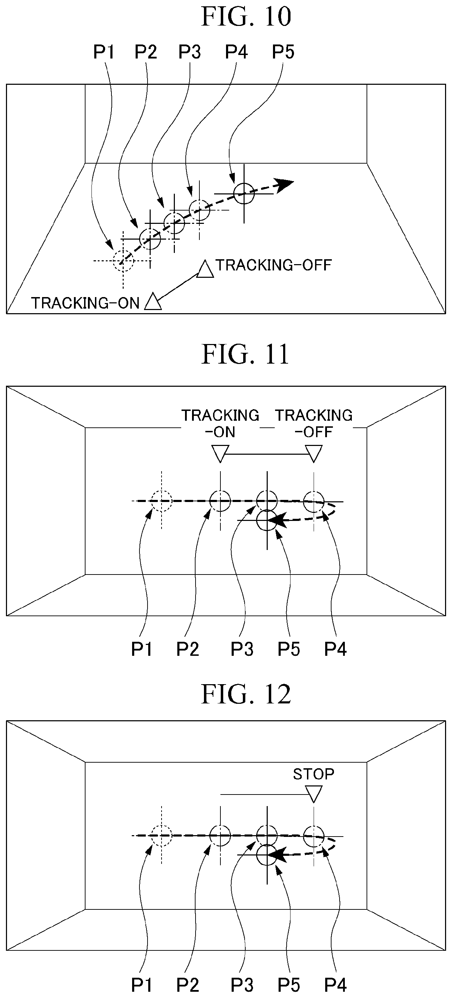

FIG. 10 is a diagram illustrating an example of the method of determining the first target position. For example, the viewpoint of the operator OP is displayed while changing such as indicators P1 to P5. At this time, it is assumed that the operator OP utters "tracking off" to the voice user interface 212b after having uttered "tracking on." In this case, in the period until the operator OP utters "tracking off" to the voice user interface 212b after having uttered "tracking on," the viewpoint of the operator OP is tracked, and the first target position is determined according to the viewpoint of the operator OP in this period. In the illustrated example, the tracking period includes P2, P3, and P4. Accordingly, the first target position is first determined at P2, then the first target position is updated with P3, and the first target position is finally updated with P4.

On the other hand, when it is determined in the determination process of S204 that an instruction to set the first target position has not been given by the operator OP, the determiner 134 maintains the previous determined first target position instead of newly determining the first target position (Step S208).

Then, the communication controller 136 of the control device 100 transmits a control command for causing the robot 2 to advance or retract to the first target position to the robot 2 via the communication interface 110. As a result, the processor 26 of the robot 2 causes the robot 2 to advance or retract to the first target position by controlling the actuator 24 on the basis of the control command (Step S210).

On the other hand, when it is determined in the determination process of S200 that an instruction to move in the traveling direction of the robot 2 has not been given by the operator OP, the display controller 222 determines whether an instruction to move in the rotating direction of the robot 2 has been given by the operator OP in a period in which the operator OP sees the video data of the external environment of the robot 2 (Step S212).

When an instruction to move in the traveling direction of the robot 2 has been given by the operator OP, the display controller 222 displays the viewpoint of the operator OP detected by the eye tracking sensor 214 on the wearable display 213 (Step S214).

Then, the acquirer 132 of the control device 100 acquires operation data and eye tracking data from the HMI 200 via the communication interface 110, and the determiner 134 determines whether an instruction to set a second target position has been given and whether the setting instruction thereof is maintained in a predetermined period on the basis of the operation data and the eye tracking data (Step S216).

For example, when the operator OP utters "tracking on" or the like to the voice user interface 212b after an instruction to move in the rotating direction of the robot 2 has been given, the determiner 134 determines that an instruction to set the second target position has been given and the setting instruction is maintained in the predetermined period. Thereafter, when the operator OP utters "tracking off" or the like to the voice user interface 212b, the determiner 134 determines that maintenance of the instruction to set the second target position ends.

When the operator OP continues to operate the switch interface 212a after an instruction to move in the rotating direction of the robot 2 has been given, the determiner 134 may determine that an instruction to set the second target position has been given and the setting instruction is maintained in the predetermined period (the period of operation). Thereafter, when the operator OP ends the operation of the switch interface 212a, the determiner 134 determines that maintenance of the instruction to set the second target position has ended.

When an instruction to set the second target position has been given by the operator OP and the instruction is maintained, the determiner 134 determines the second target position according to the viewpoint of the operator OP in the period in which the setting instruction is maintained (Step S218).

FIG. 11 is a diagram illustrating an example of the method of determining the second target position. For example, the viewpoint of the operator OP is displayed while changing such as indicators P1 to P5. At this time, it is assumed that the operator OP utters "tracking off" to the voice user interface 212b after having uttered "tracking on." In this case, in the period until the operator OP utters "tracking off" to the voice user interface 212b after having uttered "tracking on," the viewpoint of the operator OP is tracked, and the second target position is determined according to the viewpoint of the operator OP in this period. In the illustrated example, the tracking period includes P2, P3, and P4. Accordingly, the second target position is first determined at P2, then the second target position is updated with P3, and the second target position is finally updated with P4.

On the other hand, when it is determined in the determination process of S216 that an instruction to set the second target position has not been given by the operator OP, the determiner 134 maintains the previously determined second target position instead of newly determining the second target position (Step S220).

Then, the communication controller 136 of the control device 100 transmits a control command for causing the robot 2 to rotate to the second target position (which may be replaced with a target rotation angle) to the robot 2 via the communication interface 110. As a result, the processor 26 of the robot 2 causes the robot 2 to rotate to the second target position by controlling the actuator 24 on the basis of the control command (Step S222).

On the other hand, when it is determined in the determination process of S200 that an instruction to move in the traveling direction of the robot 2 has not been given by the operator OP and it is determined in the determination process of S212 that an instruction to move in the rotating direction of the robot 2 has not been given, the communication controller 136 of the control device 100 transmits a control command for causing the robot 2 to stop (a control command for performing none of advancing, retracting, and rotating) to the robot 2 via the communication interface 110. As a result, the processor 26 of the robot 2 causes the robot 2 to stop by controlling the actuator 24 on the basis of the control command (Step S224).

According to the aforementioned second embodiment, the operator OP can instruct to move or rotate the robot 2 with a simple operation similarly to the first embodiment. As a result, it is possible to reduce a stress at the time of operating of the robot 2 and to create feelings as if the robot 2 can be controlled as intended by the operator OP.

### <Other embodiments>

Other embodiments will be described below. In the aforementioned embodiments, the setting instruction for determining the first target position or the second target position is performed by allowing the operator OP to utter specific speech to the voice user interface 212b or to operate the switch interface 212a, but the present invention is not limited thereto.

For example, it may be considered that the setting instruction for determining the first target position is maintained in a period until the operator OP utters "stop" to the voice user interface 212b after an instruction to move in the traveling direction has been given. It may also be considered that the setting instruction for determining the first target position is maintained in a period in which the operator OP continues to operate the switch interface 212a after an instruction to move in the traveling direction has been given.

The same is true of the second target position. For example, it may be considered that the setting instruction for determining the second target position is maintained in a period until the operator OP utters "stop" to the voice user interface 212b after an instruction to move in the rotating direction has been given. It may also be considered that the setting instruction for determining the second target position is maintained in a period in which the operator OP continues to operate the switch interface 212a after an instruction to move in the rotating direction has been given.

FIG. 12 is a diagram illustrating another example of the method of determining the second target position. For example, the viewpoint of the operator OP is displayed while changing such as the indicators P1 to P5. At this time, in the period until the operator OP utters "stop" to the voice user interface 212b after having given an instruction to move in the rotating direction, the viewpoint of the operator OP is tracked, and the second target position is determined according to the viewpoint of the operator OP in this period. Then, P4 at the time at which "stop" has been uttered is determined as a final second target position.

The first target position or the second target position may be automatically determined without any operation of the operator OP (that is, without any setting instruction). For example, the determiner 134 automatically determines the first target position or the second target position on the basis of change of an amount of movement of the viewpoint of the operator OP detected by the eye tracking sensor 214.

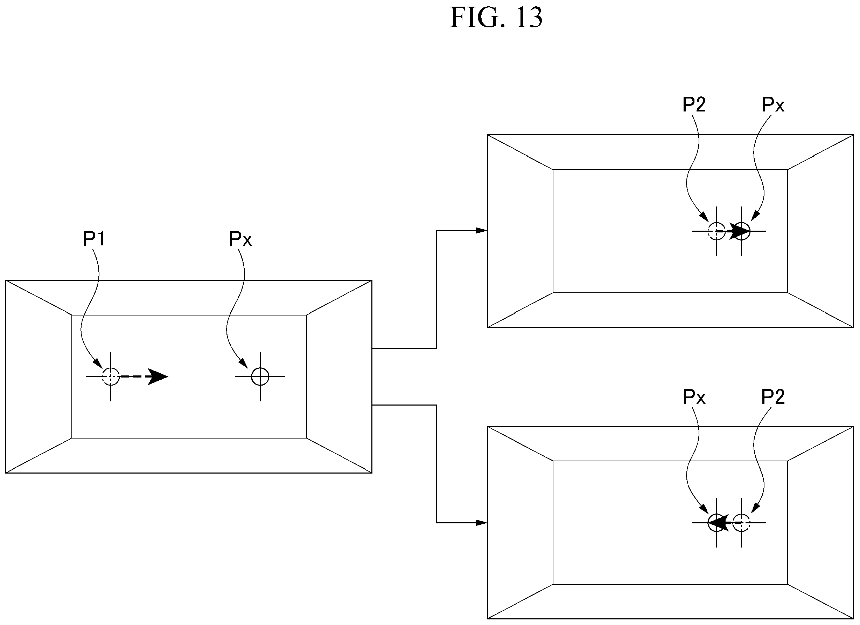

FIG. 13 is a diagram illustrating another example of the method of determining the second target position. For example, when the viewpoint is moved from a current position P1 to a position Px intended by the operator OP, the viewpoint may not reach the position Px when the amount of movement of the viewpoint is small, and the viewpoint may exceed the position Px when the amount of movement of the viewpoint is large. However, when a predetermined time elapses, the viewpoint converges naturally on Px. In consideration thereof, the determiner 134 considers a position on which the change of the amount of movement of the viewpoint converges as the position intended by the operator OP and determines the position intended by the operator OP as the second target position.

In the aforementioned embodiments, the robot 2 which is operated by the robot remote control system 1 has a real body, but the present invention is not limited thereto. For example, the robot 2 operated by the robot remote control system 1 may be a robot which is present in a virtual space such as a VR space, an AR space, or an MR space.

While embodiments of the present invention have been described above, the present invention is not limited to these embodiments, and various modifications and substitutions can be applied thereto without departing from the gist of the present invention. For example, the display that is used for remote control of the robot 2 is not limited to the wearable display 213 worn by the operator OP, but may be a desktop type or portable type display device.

### EXPLANATION OF REFERENCES

1... Robot remote control system, 2... Robot, 21... Camera, 22... Arm, 23... Hand, 24... Actuator, 25... State sensor, 26... Processor, 100... Control device, 110... Communication interface 120... Storage unit, 130... Processor, 132... Acquirer, 134... Determiner, 136... Communication controller, 200... HMI, 211... Communication interface, 212... Input interface, 213... Wearable display, 214... Eye tracking sensor, 215... Motion tracking sensor, 216... Storage unit, 220... Processor, 221... Acquirer, 222... Display controller, 223... Communication controller, NW... Network

## Claims

1. A robot remote control system comprising:
a control device configured to control a robot; and
a human-machine interface used by an operator when remotely controlling the robot,
wherein the human-machine interface includes
a first communication interface configured to communicate with the control device,
a display configured to display a video of surroundings of the robot captured by a camera,
an eye tracker configured to detect a sightline and/or viewpoint of the operator in a period in which the operator sees the display on which the video is displayed,
an estimator configured to estimate an operation intention of the operator, and
a first processor configured to transmit sightline data which is data indicating the sightline and/or viewpoint detected by the eye tracker and operation data which is data indicating the operation intention of the operator estimated by the estimator to the control device via the first communication interface, and
wherein the control device includes
a second communication interface configured to communicate with the human-machine interface, and
a second processor configured to determine a target position of the robot on the basis of the sightline data and the operation data when the sightline data and the operation data are received from the human-machine interface by the second communication interface and to move the robot to the target position.

2. The robot remote control system according to claim 1, wherein the second processor determines a first target position in a traveling direction of the robot and a second target position in a rotating direction of the robot as the target position.

3. The robot remote control system according to claim 1 or 2, wherein the human-machine interface further includes an input interface configured to receive the operator's operation, and
wherein the second processor determines a position of the viewpoint of the operator detected by the eye tracker as the target position of the robot when a predetermined operation is input to the input interface in the period in which the operator sees the display on which the video is displayed.

4. The robot remote control system according to claim 3, wherein the second processor updates the target position of the robot according to the position of the viewpoint of the operator in a period in which the predetermined operation is being input to the input interface.

5. The robot remote control system according to claim 3 or 4, wherein the input interface includes a voice user interface or a switch interface, and
wherein the predetermined operation is an operation of inputting predetermined speech to the voice user interface or an operation of operating the switch interface.

6. The robot remote control system according to any one of the preceding claims, wherein the second processor determines the target position of the robot on the basis of change of an amount of movement of the viewpoint of the operator detected by the eye tracker.

7. The robot remote control system according to claim 6, wherein the second processor determines a position on which the change of the amount of movement of the viewpoint converges as the target position of the robot.

8. A robot remote control method using a control device configured to control a robot and a human-machine interface used by an operator when remotely controlling the robot, the robot remote control method comprising:
causing the human-machine interface to communicate with the control device;
causing the human-machine interface to display a video of surroundings of the robot captured by a camera on a display;
causing the human-machine interface to detect a sightline and/or viewpoint of the operator in a period in which the operator sees the display on which the video is displayed;
causing the human-machine interface to estimate an operation intention of the operator;
causing the human-machine interface to transmit sightline data which is data indicating the detected sightline and/or viewpoint and operation data which is data indicating the estimated operation intention of the operator to the control device;
causing the control device to communicate with the human-machine interface;
causing the control device to determine a target position of the robot on the basis of the sightline data and the operation data when the sightline data and the operation data are received from the human-machine interface; and
causing the control device to move the robot to the target position.

9. A program that is executed by a control device configured to control a robot and a human-machine interface used by an operator when remotely controlling the robot, the program causing the human-machine interface to perform:
communicating with the control device;
displaying a video of surroundings of the robot captured by a camera on a display;
detecting a sightline and/or viewpoint of the operator in a period in which the operator sees the display on which the video is displayed;
estimating an operation intention of the operator; and
transmitting sightline data which is data indicating the detected sightline and/or viewpoint and operation data which is data indicating the estimated operation intention of the operator to the control device, the program further causing the control device to perform:
communicating with the human-machine interface;
determining a target position of the robot on the basis of the sightline data and the operation data when the sightline data and the operation data are received from the human-machine interface; and
moving the robot to the target position.
